# FASCICULE DE BREVET EUROPEEN

(11) **EP 0 651 394 B1**
(45) Date de publication et mention de la délivrance du brevet: **16.12.1998**
(21) Numéro de dépôt: 94460037.8
(22) Date de dépôt: 26.10.1994
(51) Int. Cl.: G11C 16/06

(54) **Circuit intégré contenant une mémoire protégée et système sécurisé utilisant ledit circuit intégré**
Integrierte Schaltung mit einem geschützten Speicher und geschütztes System das diese integrierte Schaltung verwendet
Integrated circuit comprising a protected memory and protected circuit using said integrated circuit

(30) Priorité: 28.10.1993 FR 9313091
(43) Date de publication de la demande: 03.05.1995
(73) Titulaire: SGS-THOMSON MICROELECTRONICS S.A., 94250 Gentilly (FR)
(72) Inventeur: Bahout, Yvon, F-56100 Lorient (FR)
(74) Mandataire: Fournier, Michel Robert Marie

(56) Documents cités:
- EP-A- 0 467 355
- EP-A- 0 490 511
- US-A- 4 211 919
- IEEE JOURNAL OF SOLID-STATE CIRCUITS., vol.21, no.5, Octobre 1986, NEW YORK US pages 881 - 888 LETHAM ET AL 'A 128K EPROM USING ENCRYPTION OF PSEUDORANDOM NUMBERS TOENABLE READ ACCESS'
- IBM TECHNICAL DISCLOSURE BULLETIN., vol.30, no.12, Mai 1988, NEW YORK US pages 30 - 33 'REMOTE SECURITY ANCHORING OF REMOTE USER IDENTIFICATION'

## Description

L'invention concerne un circuit intégré utilisable comme mémoire non volatile modifiable électriquement et qui permet une protection en lecture d'au moins une partie des données qu'elle contient. L'invention concerne également un système utilisant un tel circuit intégré en vue de rendre ce système inutilisable sans la connaissance d'un code confidentiel permettant d'inhiber la protection de la mémoire et donc du système.

L'invention trouve de nombreuses applications dans le domaine de l'électronique dit "grand public". On peut citer par exemple les auto-radios à code antivol, les micro-ordinateurs portables, les magnétoscopes, les appareils de télévision et plus généralement tout appareil électronique que l'on souhaite protéger du vol par un code confidentiel.

Le circuit intégré selon l'invention pourra également être utilisé pour la transmission de données sécurisées grâce à la partie protégeable de la mémoire.

Jusqu'à présent, la protection par code antivol d'appareils électroniques tels que les auto-radios était réalisée au moyen d'un code confidentiel spécifique de l'appareil écrit dans une mémoire programmable à une adresse déterminée. La mémoire qui est généralement du type EEPROM est associée à des moyens de verrouillage d'une partie au moins des données qu'elle contient, le verrouillage étant activé automatiquement lorsque la mémoire n'est plus alimentée. La mémoire pourra alors être déverrouillée si elle reçoit une commande d'écriture à l'adresse déterminée d'une donnée qui coïncide avec le code confidentiel.

L'inconvénient de cette solution réside dans le fait qu'il est possible de détecter l'adresse du code confidentiel et d'y inscrire le code confidentiel de son choix. Ainsi, un appareil qui a été dérobé pourra à nouveau être utilisé grâce à ce nouveau code.

Une solution à ce problème peut consister à utiliser une carte à microprocesseur qui garantit un haut degré d'inviolabilité. Cette solution est cependant d'un coût élevé (coût de la carte et de son lecteur), ce qui exclut pratiquement son utilisation pour les appareils grand public bon marché. Par ailleurs, la personnalisation de chaque appareil produit, c'est-à-dire l'affectation d'un mot de code spécifique doit nécessairement être réalisée par le fabricant du microprocesseur de la carte compte tenu de la confidentialité attachée aux procédures de programmation de ces cartes.

L'invention a pour but de remédier aux inconvénients précédents en proposant un circuit intégré standard, personnalisable unitairement par le fabricant d'appareils électroniques et assurant une inviolabilité raisonnable du système.

Dans ce but, l'invention a pour objet un circuit intégré comprenant une mémoire non volatile modifiable électriquement, un circuit de commande associé et au moins un élément de mémoire volatile matérialisant un verrou dont l'état à sa mise sous tension définit un état verrouillé de ladite mémoire, ledit circuit intégré étant caractérisé en ce que ladite mémoire comporte une première zone protégeable en lecture par ledit verrou et une seconde zone toujours protégée en lecture, protégée en écriture par ledit verrou et contenant au moins un mot de passe à une adresse déterminée, en ce que ledit circuit de commande comprend des premiers moyens pour détecter une commande d'écriture d'une donnée adressée par ladite adresse déterminée alors que ladite mémoire est verrouillée et des seconds moyens pour vérifier la compatibilité de ladite donnée avec ledit mot de passe, ladite compatibilité étant différente de l'identité, et en ce qu'en cas de compatibilité ledit verrou est libéré.

Selon un mode de réalisation particulier, le circuit intégré comporte des moyens de décryptage et ladite vérification de compatibilité consiste alors à décrypter ladite donnée reçue adressée par ladite adresse déterminée et à comparer ladite donnée décryptée audit mot de passe contenu à ladite adresse déterminée.

Pour permettre au fabricant ou à l'utilisateur de modifier le mot de passe, sans pour cela qu'il puisse être détecté par une simple analyse des signaux extérieurs au circuit, on prévoira avantageusement que lorsqu'une commande d'écriture d'une donnée adressée par ladite adresse déterminée est détectée alors que le verrou est libéré, le circuit de commande active le décryptage de ladite donnée et l'écriture de ladite donnée décryptée à ladite adresse déterminée.

Selon encore une autre variante de réalisation, la deuxième zone contient plusieurs mots de passe et l'un de ces mots de passe, appelé mot de passe du fabricant, est protégeable en écriture indépendamment de l'état du verrou. Il sera alors possible au fabricant d'imposer un mot de passe non modifiable par un tiers tout en permettant à l'utilisateur de choisir à volonté son propre code confidentiel qui correspondra à un mot de passe "utilisateur" modifiable.

Il est par ailleurs souhaitable de permettre au fabricant d'utiliser une procédure unique pour chaque appareil fabriqué et d'éviter que la personnalisation d'un appareil nécessite une programmation spécifique des autres composants de l'appareil. Pour cela et selon un autre exemple de réalisation de l'invention, le circuit contient une clé de décryptage et la mémoire comporte une troisième zone librement accessible en lecture et contenant une donnée d'identification de système, ladite clé de décryptage et ledit mot de passe étant des fonctions de ladite donnée d'identification.

Dans le cas où un mot de passe réservé au fabricant est prévu, cette dernière disposition permet au fabricant de retrouver le mot de passe encrypté à partir de la seule donnée d'identification. La mémoire pourra ainsi être déverrouillée dans le cas par exemple où l'utilisateur ne retrouve plus son code confidentiel.

Selon un mode de réalisation particulier, la clé est un mot de même dimension que les mots de passe et l'encryptage ou décryptage consiste alors à effectuer des opérations "ou exclusif" sur les bits de même poids de la clé et du mot à encrypter ou décrypter.

Selon un autre mode de réalisation, la clé est contenue dans la seconde zone et le circuit de commande comprend des troisièmes moyens pour détecter une commande d'écriture d'une donnée adressée par l'adresse de ladite clé alors que ledit verrou est libéré, le circuit de commande activant ledit décryptage de ladite donnée et l'écriture de ladite donnée décryptée à ladite adresse de clé.

Avantageusement, la clé sera protégeable en écriture de la même façon que le mot de passe du fabricant.

Enfin, pour permettre un contrôle supplémentaire de l'intégrité de la mémoire, on pourra aussi prévoir que toute commande d'écriture d'une donnée adressée par l'adresse (ADx) du mot de passe du fabricant (PW) protégé en écriture entraîne une vérification de la compatibilité entre ladite donnée et ledit mot de passe du fabricant et, en cas d'incompatibilité, le verrouillage de la mémoire.

L'invention a également pour objet un système comportant une unité de traitement reliée à une interface utilisateur et à un circuit intégré tel que défini précédemment, ladite unité étant capable d'adresser en lecture et en écriture ledit circuit intégré. Le système est caractérisé en ce qu'une partie au moins des données nécessaires au fonctionnement dudit système est contenue dans ladite première zone et en ce que l'unité de traitement est programmée pour prendre en compte un code confidentiel par l'intermédiaire de l'interface utilisateur et pour commander audit circuit intégré l'écriture dudit code confidentiel à ladite adresse déterminée.

Dans le cas où la seconde zone contient une clé d'encryptage et de décryptage et un mot de passe du fabricant protégé en écriture et fonction de la donnée d'identification, l'unité de traitement comprend avantageusement des moyens pour calculer le mot de passe encrypté en fonction de la donnée d'identification lue dans la troisième zone. Cette possibilité peut être exploitée pour contrôler la cohérence entre la clé et le mot de passe du fabricant contenus dans la mémoire.

D'autres aspects de réalisation et avantages de l'invention apparaîtront dans la suite de la description en référence aux figures.
- La figure 1 représente la structure d'une mémoire EEPROM selon l'état de la technique.
- La figure 2 représente l'organisation des données contenues dans la mémoire conformément à l'invention.
- La figure 3 représente les modifications à apporter à la mémoire selon la figure 1 pour la mise en oeuvre de l'invention.
- La figure 4 représente une partie du circuit de commande d'un exemple de réalisation du circuit intégré selon l'invention.
- La figure 5 représente schématiquement un système utilisant le circuit intégré selon l'invention.

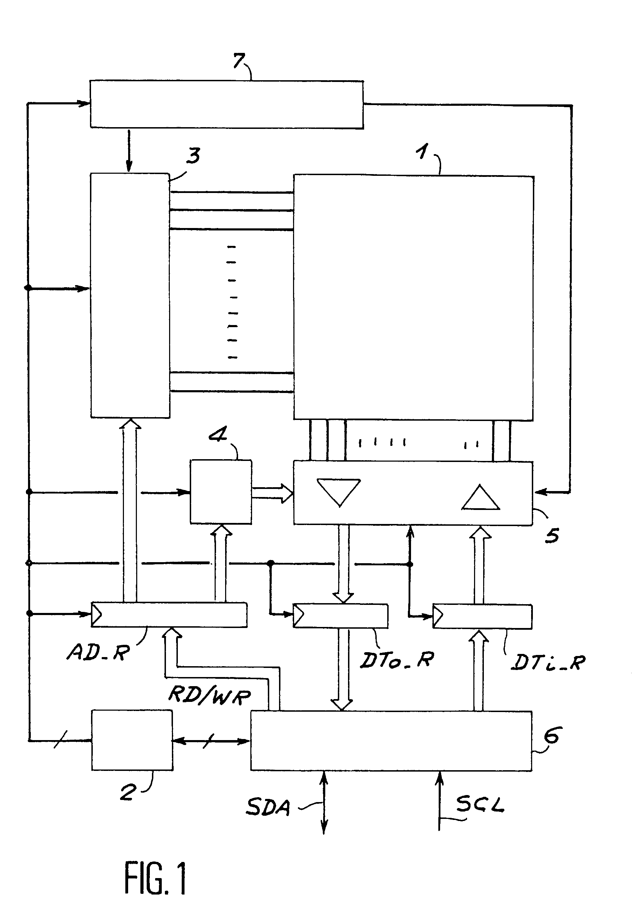

La figure 1 représente un exemple de structure d'une mémoire EEPROM de type classique et susceptible d'être adaptée pour mettre en oeuvre l'invention.

La mémoire comprend une matrice 1 de points mémoire reliée à un décodeur de lignes 3 et à un décodeur de colonnes 4 associé à des circuits de lecture et d'écriture 5. L'écriture de la matrice 1 est effectuée au moyen d'un circuit de programmation 7 essentiellement constitué d'un oscillateur, d'un élévateur de tension et d'un générateur de rampe programmée. Les décodeurs 3 et 4 sont reliés à un registre d'adresse AD-R. Les circuits de lecture et d'écriture 5 sont reliés respectivement à un registre de données de sortie DTo-R et à un registre de données d'entrée DTi-R. Les registres AD-R, DTo-R, DTi-R communiquent avec un circuit d'interface 6. Selon l'exemple représenté, le circuit 6 est relié à un bus conforme à la norme I²C qui comprend notamment une ligne d'horloge SCL et une ligne bidirectionnelle SDA permettant de véhiculer les adresses, les données et les commandes. L'ensemble est contrôlé par un circuit de commande 2. Le circuit 2 sera par exemple réalisé au moyen d'un réseau logique programmable (PLA) conçu pour fournir les signaux de commande aux différents circuits en fonction des commandes reçues de la ligne SDA, telles que les commandes de lecture RD ou d'écriture WR.

La mémoire représentée à la figure 1 étant de type classique, une description détaillée de son fonctionnement serait superflue. Il convient toutefois de rappeler que le circuit d'interface 6 a pour fonction en réception de décoder les commandes reçues de la ligne SDA et de les transmettre au circuit de commande 2. L'interface 6 effectue également la conversion série-parallèle des adresses et des données reçues avant de les transmettre respectivement au registre d'adresse AD-R et au registre de données d'entrée DTi-R. En émission, sous le contrôle du circuit de commande 2, l'interface 6 effectue la conversion parallèle-série des données lues contenues dans le registre de données de sortie DTo-R. Bien entendu, ces transferts de données sont synchronisés par le signal d'horloge SCL et respectent le protocole de communication du bus.

Pour plus de détails, il conviendra de se référer aux spécifications des mémoires EEPROM disponibles sur le marché comme par exemple le modèle ST24C04 commercialisé par la société SGS-THOMSON MICROELECTRONICS.

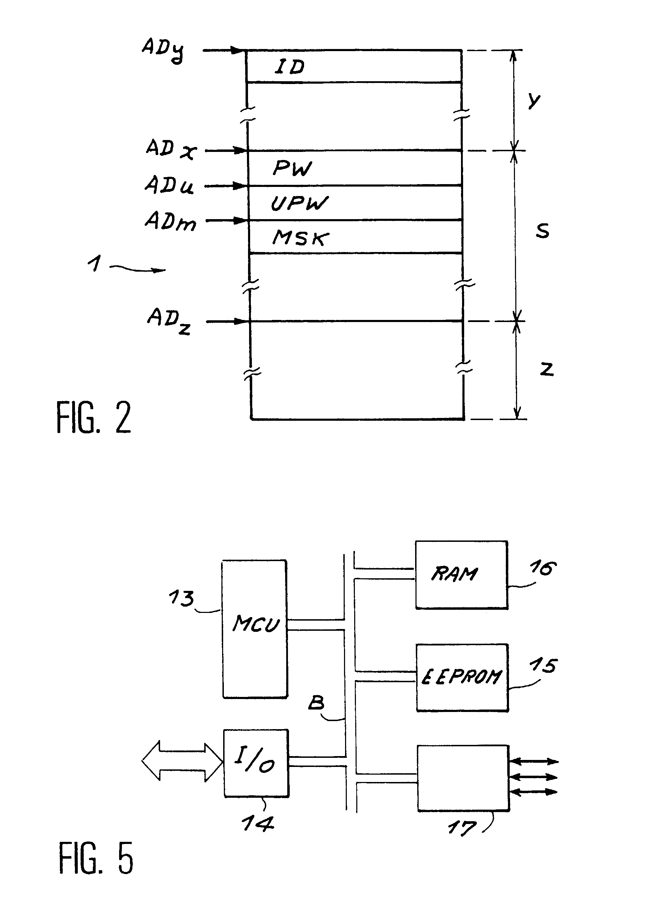

La figure 2 représente l'organisation des données contenues dans la mémoire en vue de la mise en oeuvre de l'invention. Une première zone Z est destinée à contenir les données que l'on souhaite protéger par un code confidentiel. Ces données seront par exemple les données nécessaires au fonctionnement d'un système à microprocesseur ou d'un appareil muni d'un microcontrôleur. Cette zone est repérée par les poids forts de l'adresse ADz du premier mot qu'elle contient.

Une seconde zone S contient un ou plusieurs mots de passe PW, UPW ainsi qu'une clé MSK repérés respectivement par les adresses ADx, ADu et ADm. Il est à remarquer que cette zone n'est pas nécessairement formée de mots contigus. Conformément à l'invention, les mots contenus dans la zone S sont en permanence protégés en lecture. Ils peuvent être modifiés (écriture) sous certaines conditions comme nous le verrons ultérieurement.

Une troisième zone Y libre en lecture contient une donnée d'identification ID (par exemple un numéro de série) de l'appareil qui comporte la mémoire. Cette zone doit pouvoir être écrite par le fabricant de l'appareil mais elle ne doit pas pouvoir être modifiée par son utilisateur.

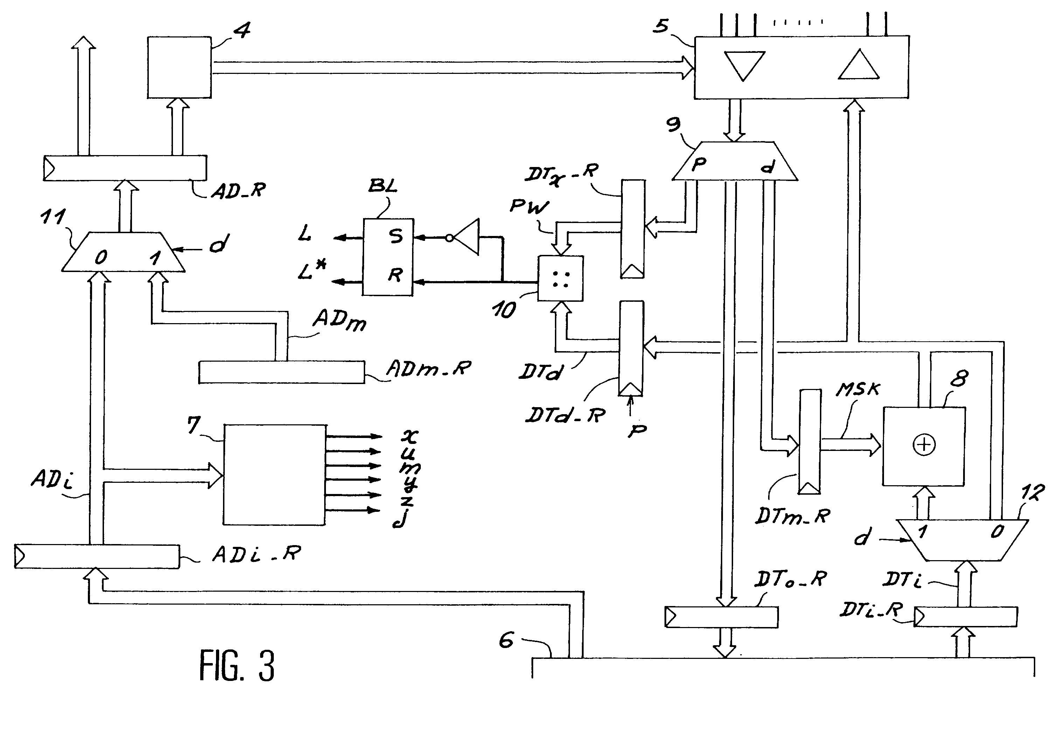

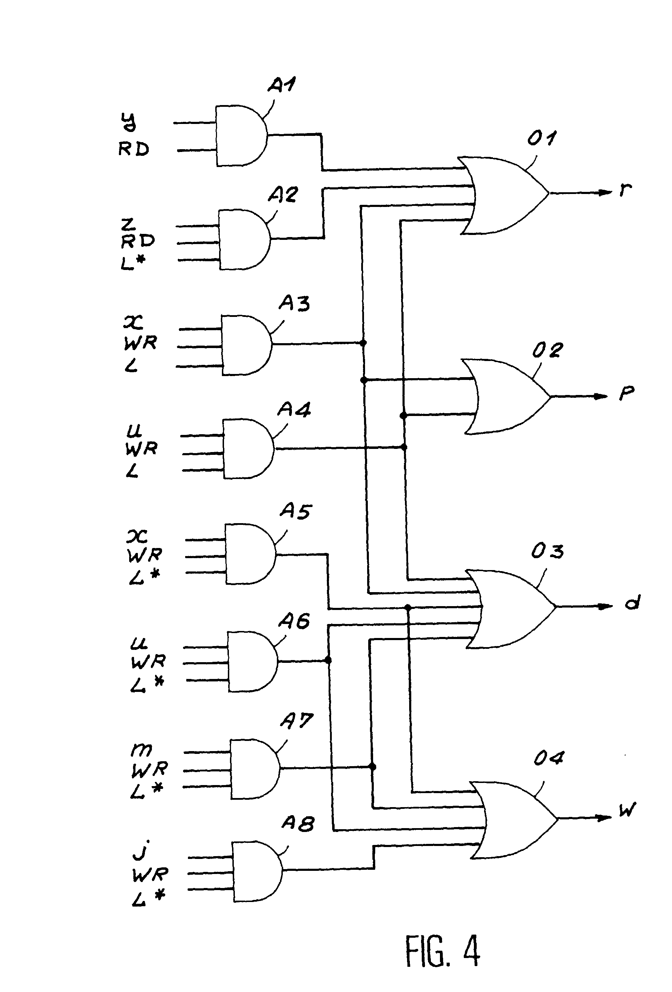

Selon l'invention, le circuit de commande 2 est conçu de façon à contrôler les conditions d'accès aux trois zones conformément aux règles exposées ci-dessus. En particulier, l'accès en lecture de la première zone Z sera conditionné par une présentation préalable d'un mot de passe encrypté au moyen de la clé MSK. Des explications plus détaillées vont maintenant être données en référence aux figures 3 et 4.

La figure 3 représente les modifications à apporter au chemin de données de la mémoire représentée à la figure 1 pour la mise en oeuvre de l'invention. Nous retrouvons sur cette figure le circuit d'interface 6, le décodeur de colonnes 4, les circuits de lecture et d'écriture 5 et le registre d'adresse AD-R. Le registre AD-R est relié à l'interface 6 par l'intermédiaire d'un second registre d'adresse ADi-R et d'un multiplexeur 11. La sortie du second registre d'adresse ADi-R est reliée à l'entrée d'un circuit de décodage d'adresse 7 fournissant en sortie les signaux x, u, m, y, z, j représentatifs de la détection d'adresses ou de zones de mémoire particulières. La première entrée du multiplexeur 11 est reliée à la sortie du second registre d'adresse ADi-R et sa seconde entrée reçoit une valeur d'adresse fixe ADm correspondant à l'adresse de la clé MSK.

La sortie du registre de données d'entrée DTi-R est reliée à l'entrée d'un démultiplexeur 12 dont une des sorties est reliée à l'entrée d'un circuit de décryptage 8. La seconde sortie du démultiplexeur 12 et la sortie du circuit 8 sont reliées aux entrées des circuits 5 et d'un registre de données décryptées DTd-R.

Les sorties des circuits 5 sont reliées à l'entrée d'un second démultiplexeur 9 à trois sorties. La première sortie est reliée à l'entrée d'un registre de données secrètes DTx-R, la seconde sortie est reliée à l'entrée du registre de données de sortie DTo-R et la troisième sortie est reliée à l'entrée d'un registre de clé DTm-R. La sortie du registre de clé DTm-R est reliée à l'entrée du circuit de décryptage 8.

Les sorties des registres de données décryptées DTd-R et de données secrètes DTx-R sont reliées à un comparateur 10 dont la sortie est reliée d'une part à l'entrée R de remise à zéro d'une bascule BL et d'autre part, à son entrée S de positionnement (mise à "1") par l'intermédiaire d'un inverseur. L'état L (avec son complément L∗) de la bascule BL définit l'état protégé de la mémoire. Plus précisément, cela signifie que la zone Z est interdite en lecture lorsque L = 1. L'entrée de positionnement S de la bascule BL est reliée à des moyens non représentés pour forcer L à 1 lors de la mise sous tension du circuit.

Avant d'expliquer le fonctionnement du circuit de la figure 3, il convient de se reporter à la figure 4 pour définir les principaux signaux utiles à la commande du circuit. Selon l'exemple représenté, le circuit de décodage d'adresses 7 fournit les signaux logiques x, u, m, y, z, j en cas de coïncidence entre l'adresse reçue contenue dans le second registre d'adresse ADi-R et respectivement les adresses ADx, ADu, ADm, ADy, ADz définies précédemment en référence à la figure 2. Un signal supplémentaire j permet de définir une zone particulière de la mémoire où une écriture serait autorisée selon la procédure normale, cette zone pouvant d'ailleurs coïncider avec une partie ou l'intégralité de la zone Z.

Le circuit logique représenté à la figure 4 a la structure générale d'un réseau logique programmable pouvant par conséquent être intégré facilement au réseau constituant le circuit de commande de la mémoire classique. Il est ainsi constitué d'un ensemble de portes ET A1 à A8 dont les sorties sont reliées à un ensemble de portes OU 01 à 04. Les entrées des portes ET reçoivent les divers signaux définis précédemment ainsi que des signaux de commande de lecture RD ou d'écriture WR décodés par l'interface 6.

La première porte OU 01 fournit un signal de commande interne de lecture r dans les quatre cas suivants :
- commande externe de lecture RD dans la zone libre Y ;
- commande externe de lecture RD dans la zone protégée Z alors que le verrou L est libéré (L∗ = 1) ;
- présentation d'un mot de passe encrypté détecté par une commande d'écriture WR à l'une des adresses ADx ou ADu alors que la mémoire est verrouillée (L = 1).

Les différents cas de présentation sont détectés par la seconde porte OU 02 qui fournit un signal p indiquant si les conditions d'une présentation sont satisfaites. Dans ce cas, la commande externe d'écriture WR doit être interprétée comme une lecture interne d'un mot de passe.

La troisième porte OU 03 fournit un signal d de détection de décryptage. Le signal d est activé lorsque l'une des conditions suivantes est satisfaite :
- une commande externe d'écriture WR est interprétée comme une présentation ;
- une commande externe d'écriture WR d'un des mots de passe est détectée alors que le verrou est libéré (L = 0) ;
- une commande externe d'écriture WR de la clé est détectée alors que le verrou L est libéré.

La quatrième porte OU 04 fournit un signal de commande interne d'écriture w lorsqu'une commande externe d'écriture WR d'un des mots de passe, de la clé ou d'une donnée contenue dans une zone autorisée en écriture est détectée alors que le verrou est libéré.

Le circuit de la figure 3 fonctionne de la façon suivante. Lorsqu'une commande externe de lecture d'une donnée contenue dans la zone libre Y ou dans la zone protégée Z est détectée alors que le verrou L est libre, le démultiplexeur 9 autorise le transfert de la donnée lue vers le registre de données de sortie DTo-R. Dans tous les cas où le signal de détection de décryptage d est actif, le circuit effectue une lecture préalable de la clé MSK en adressant la mémoire par l'adresse ADm par l'intermédiaire du multiplexeur 11. La donnée lue est alors transférée par le démultiplexeur 9 dans le registre de clé DTm-R de façon à permettre l'opération de décryptage par le circuit 8. Ensuite, s'il s'agit d'une présentation (p = 1), le démultiplexeur 9 autorise le transfert du mot de passe lu dans le registre de données secrètes DTx-R. Parallèlement, la donnée reçue contenue dans le registre de données d'entrée DTi-R est transférée à l'entrée du circuit de décryptage 8 par le démultiplexeur 12. D'autre part, la donnée d'entrée décryptée par le circuit 8 est transférée dans le registre de données décryptées DTd-R et son contenu est comparé à celui du registre DTx-R. En cas d'identité, la bascule BL est remise à zéro, ce qui libère le verrou L. En cas de différence, la bascule BL est mise à 1, ce qui verrouille L.

Lorsqu'une commande externe d'écriture WR d'un mot de passe ou de la clé est détectée alors que le verrou est libéré, cette commande d'écriture est d'abord interprétée comme une commande de décryptage (d = 1) et entraîne comme pour une présentation un cycle préliminaire de lecture de la clé MSK et son chargement dans le registre de clé DTm-R par l'intermédiaire du démultiplexeur 9. Lorsque cette opération est terminée, la donnée reçue est décryptée par le circuit 8 puis écrite dans la mémoire en tant que nouveau mot de passe ou nouvelle clé, à condition que la donnée à écrire ne se situe pas dans une zone protégée en écriture indépendamment de l'état du verrou L.

Une façon simple de réaliser le décryptage consiste à choisir comme clé MSK un mot de même longueur que les mots de passe et à effectuer des opérations "OU EXCLUSIF" sur les bits de même poids de la clé et du mot à décrypter. Dans ce cas, l'opération de décryptage est identique à celle d'encryptage.

La figure 5 représente schématiquement un système sécurisé au moyen d'un circuit intégré selon l'invention. Le système est organisé autour d'un bus B et comprend une unité de traitement programmable 13, telle qu'un microprocesseur ou un microcontrôleur, un circuit 15 contenant une mémoire protégée conformément à l'invention, une interface utilisateur 14 et d'autres composants tels qu'une mémoire vive 16 et un ensemble de circuits d'interface 17.

L'interface 14 permet à l'utilisateur de présenter un code confidentiel après la mise sous tension du système. Ce code confidentiel est normalement identique à la valeur encryptée d'un mot de passe "utilisateur" UPW contenu dans la mémoire. L'unité de traitement envoie alors au circuit 15 une commande d'écriture à l'adresse ADu du code confidentiel. Comme expliqué précédemment, le circuit 15 interprète cette commande comme une présentation et effectue la comparaison entre le mot reçu décrypté et le mot de passe UPW lu à l'adresse ADu. Si l'égalité est détectée, le verrou L est libéré.

Le système sera avantageusement prévu pour permettre à l'utilisateur de modifier son code confidentiel au moyen d'une commande appropriée appliquée à l'interface 14. L'écriture dans le circuit 15 d'un nouveau mot de passe correspondant s'effectuera comme indiqué précédemment. Cette opération s'accompagnera d'une mise à 1 de la bascule BL mais celle-ci sera remise à zéro à la suite d'une nouvelle présentation du nouveau code confidentiel.

On peut constater que les présentations ou les modifications du mot de passe ne permettent pas de détecter par une simple analyse des signaux véhiculés sur le bus, la clé et le mot de passe contenus dans la mémoire.

Selon une variante, la clé et le mot de passe du fabricant sont placés dans une zone protégée en écriture et sont calculables en fonction d'une donnée d'identification ID au moyen d'un algorithme confidentiel. Si d'autre part, l'unité de traitement contient un algorithme ou une table lui permettant de calculer le mot de passe encrypté en fonction de la donnée d'identification, l'unité sera en mesure de vérifier la compatibilité entre le mot de passe du fabricant et la clé contenue dans la mémoire en présentant le mot de passe du fabricant encrypté résultant du calcul.

Cette vérification pourra être déclenchée automatiquement par le microcontrôleur en prévoyant dans son programme d'exécution des commandes périodiques ou aléatoires d'écriture du mot de passe du fabricant encrypté. Ainsi, dans le cas où le mot de passe reçu par la mémoire est différent de celui qu'elle contient, elle se verrouille automatiquement.

Les moyens permettant au fabricant de verrouiller en écriture une zone déterminée de la mémoire sont de type classique. Une telle protection est par exemple prévue dans la mémoire ST24C04 de SGS-THOMSON MICROELECTRONICS.

Le mode de réalisation qui vient d'être décrit ne doit pas être considéré comme limitatif de l'invention car de nombreuses variantes peuvent être apportées par l'homme du métier en remplaçant certains éléments décrits par des moyens équivalents ou en adaptant la mise en oeuvre à d'autres types de mémoires.

## Revendications

1. Circuit intégré comprenant une mémoire (1) non volatile modifiable électriquement, un circuit de commande (2) associé et au moins un élément de mémoire volatile (BL) matérialisant un verrou (L) dont l'état à sa mise sous tension définit un état verrouillé de ladite mémoire, ledit circuit intégré étant caractérisé en ce que ladite mémoire (1) comporte une première zone (Z) protégeable en lecture par ledit verrou (L) et une seconde zone (S) toujours protégée en lecture, protégée en écriture par ledit verrou (L) et contenant au moins un mot de passe (PW, UPW) à une adresse déterminée (ADx, ADu), en ce que ledit circuit de commande (2) comprend des premiers moyens (7) pour détecter une commande d'écriture d'une donnée adressée par ladite adresse déterminée (ADx, ADu) alors que ladite mémoire est verrouillée et des seconds moyens (8, 10) pour vérifier la compatibilité de ladite donnée avec ledit mot de passe (PW, UPW), ladite compatibilité étant différente de l'identité, et en ce qu'en cas de compatibilité ledit verrou (L) est libéré.

2. Circuit intégré selon la revendication 1, caractérisé en ce qu'il comporte des moyens de décryptage (8), ladite vérification de compatibilité consistant alors à décrypter ladite donnée reçue adressée par ladite adresse déterminée (ADx, ADu) et à comparer ladite donnée décryptée audit mot de passe (PW, UPW) contenu à ladite adresse déterminée (ADx, ADu).

3. Circuit intégré selon la revendication 2, caractérisé en ce que lorsqu'une commande d'écriture d'une donnée adressée par ladite adresse déterminée (ADx) est détectée alors que le verrou (L) est libéré, le circuit de commande (2) active le décryptage de ladite donnée et l'écriture de ladite donnée décryptée à ladite adresse déterminée (ADx).

4. Circuit intégré selon l'une des revendications 1 à 3, caractérisé en ce que ladite seconde zone (S) contient plusieurs mots de passe (PW), (UPW), en ce que l'un desdits mots de passe (PW), ci-après appelé mot de passe du fabricant, est protégeable en écriture indépendamment de l'état du verrou (L).

5. Circuit intégré selon la revendication 4, caractérisé en ce qu'il contient une clé de décriptage (MSK), en ce que ladite mémoire (1) comporte une troisième zone (Y) librement accessible en lecture et contenant une donnée d'identification (ID) de système et en ce que ladite clé (MSK) et ledit mot de passe du fabricant (PW) sont des fonctions de ladite donnée d'identification (ID).

6. Circuit intégré selon la revendication 5, caractérisé en ce que ladite clé (MSK) est un mot de même longueur que lesdits mots de passe (PW, UPW) et en ce que ledit encryptage ou décryptage consiste alors à effectuer des opérations "ou exclusif" sur les bits de même poids respectivement de la clé et du mot à encrypter ou décrypter.

7. Circuit intégré selon la revendication 5 ou 6, caractérisé en ce que ladite clé (MSK) est contenue dans ladite seconde zone (S), en ce que ledit circuit de commande (2) comprend des troisièmes moyens (7) pour détecter une commande d'écriture d'une donnée adressée par l'adresse (ADm) de ladite clé (MSK) alors que ledit verrou (L) est libéré et en ce que le circuit de commande (2) active ledit décryptage de ladite donnée et l'écriture de ladite donnée décryptée à ladite adresse de clé (ADm).

8. Circuit intégré selon l'une des revendications 5 à 7, caractérisé en ce que ladite clé (MSK) est protégeable en écriture indépendamment de l'état du verrou (L).

9. Circuit intégré selon l'une des revendications 5 à 8, caractérisé en ce que toute commande d'écriture d'une donnée adressée par l'adresse (ADx) du mot de passe du fabricant (PW) protégé en écriture entraîne une vérification de la compatibilité entre ladite donnée et ledit mot de passe du fabricant et, en cas d'incompatibilité, le verrouillage de la mémoire.

10. Système comportant une unité de traitement (13) reliée à une interface utilisateur (14) et à un circuit intégré (15) selon l'une des revendications 2 à 8, ladite unité (13) étant capable d'adresser en lecture et en écriture ledit circuit intégré (15), caractérisé en ce qu'une partie au moins des données nécessaires au fonctionnement dudit système est contenue dans ladite première zone (Z) et en ce que l'unité de traitement (13) est programmée pour prendre en compte un code confidentiel par l'intermédiaire de l'interface utilisateur (14) et pour commander audit circuit intégré (15) l'écriture dudit code confidentiel à ladite adresse déterminée (ADx, ADu).

11. Système comportant une unité de traitement (13) et un circuit intégré (15) selon la revendication 9, ladite unité étant capable d'adresser en lecture et en écriture ledit circuit intégré (15), caractérisé en ce qu'une partie au moins des données nécessaires au fonctionnement dudit système est contenue dans ladite première zone (Z), en ce que le mot de passe du fabricant est protégé en écriture, en ce que l'unité de traitement (13) comprend des moyens pour calculer le mot de passe du fabricant (PW) encrypté en fonction de ladite donnée d'identification (ID) lue dans ladite troisième zone (Y) et en ce que l'unité de traitement est programmée pour commander audit circuit intégré (15) l'écriture dudit mot de passe du fabricant encrypté à ladite adresse (ADx) du mot de passe (PW) du fabricant.

## Patentansprüche

1. Integrierter Schaltkreis mit einem nichtflüchtigen, elektrisch modifizierbaren Speicher (1), einem dazugehörigen Steuerschaltkreis (2) und wenigstens einem flüchtigen Speicherelement (BL), das ein Verriegelungsglied (L) darstellt, dessen Zustand bei seinem Einschalten einen verriegelten Zustand des Speichers definiert, wobei der integrierte Schaltkreis dadurch gekennzeichnet ist, daß der Speicher (1) eine erste Zone (Z), die lesegeschützt werden kann durch das Verriegelungsglied (L) und eine zweite Zone (S) umfaßt, die immer lesegeschützt ist, die durch das Verriegelungsglied (L) schreibgeschützt ist und wenigstens ein Paßwort (PW, UPW) an einer vorgegebenen Adresse (ADx, ADu) umfaßt, daß der Steuerschaltkreis (2) erste Mittel zum Erfassen (7) eines Schreibbefehls einer Dateneinheit, die durch die vorgegebene Adresse (ADx, ADu) adressiert ist, während der Speicher verriegelt ist, und zweite Mittel (8, 10) umfaßt, um die Kompatibilität der Dateneinheit mit dem Paßwort (PW, UPW) zu verifizieren, wobei die Kompatibilität sich von der Identität unterscheidet, und daß bei Kompatibilität das Verriegelungsglied (L) freigegeben wird.

2. Integrierter Schaltkreis nach Anspruch 1, dadurch gekennzeichnet, daß er Mittel zum Entschlüsseln (8) umfaßt, wobei die Verifizierung der Kompatibilität besteht aus dem Entschlüsseln der empfangenen Dateneinheit, die durch die vorgegebene Adresse (ADx, ADu) adressiert ist, und dem Vergleichen der entschlüsselten Dateneinheit mit dem Paßwort (PW, UPW), das abgelegt ist an der vorgegebenen Adresse (ADx, ADu).

3. Integrierter Schaltkreis nach Anspruch 2, dadurch gekennzeichnet, daß bei dem Erfassen eines Schreibbefehls einer Dateneinheit, die an der vorgegebenen Adresse (ADx) adressiert ist, während das Verriegelungsglied (L) freigegeben ist, der Steuerschaltkreis (2) die Entschlüsselung der Dateneinheit und das Schreiben der entschlüsselten Dateneinheit an der vorgegebenen Adresse (ADx) veranlaßt.

4. Schaltkreis nach einem der Ansprüche 1 bis 3, dadurch gekennzeichnet, daß die zweite Zone (S) mehrere Paßwörter (PW, UPW) enthält, daß eines der Paßwörter (PW), im folgenden Fabrikationspaßwort genannt, schreibgeschützt werden kann unabhängig von dem Zustand des Verriegelungsgliedes (L).

5. Integrierter Schaltkreis nach Anspruch 4, dadurch gekennzeichnet, daß er einen Entschlüsselungsschlüssel (MSK) enthält, daß der Speicher (1) eine dritte Zone (Y) umfaßt, die zum Lesen frei zugänglich ist und eine Identifikationsdateneinheit (ID) des Systems enthält, und daß der Schlüssel (MSK) und das Fabrikationspaßwort (PW) von der Identifikationsdateneinheit (ID) abhängen.

6. Integrierter Schaltkreis nach Anspruch 5, dadurch gekennzeichnet, daß der Schlüssel (MSK) ein Wort gleicher Länge wie die Paßwörter (PW, UPW) ist und daß die Verschlüsselung oder Entschlüsselung darin besteht, "Exklusiv- Oder"-Operationen auf den Bits gleichen Gewichts jeweils des Schlüssels und des zu verschlüsselnden oder entschlüsselnden Wortes auszuführen.

7. Integrierter Schaltkreis nach Anspruch 5 oder 6, dadurch gekennzeichnet, daß der Schlüssel (MSK) in der zweiten Zone (S) enthalten ist, daß der Steuerschaltkreis (2) dritte Mittel (7) zum Erfassen eines Schreibbefehls einer durch die Adresse (ADm) des Schlüssels (MSK) adressierten Dateneinheit umfaßt, während das Verriegelungsglied (L) freigegeben ist, und daß der Steuerschaltkreis (2) die Entschlüsselung der Dateneinheit und das Schreiben der entschlüsselten Dateneinheit an der Adresse des Schlüssels (ADm) veranlaßt.

8. Integrierter Schaltkreis nach einem der Ansprüche 5 bis 7, dadurch gekennzeichnet, daß der Schlüssel (MSK) unabhängig vom Zustand des Verriegelungsgliedes (L) schreibgeschützt werden kann.

9. Integrierter Schaltkreis nach einem der Ansprüche 5 bis 8, dadurch gekennzeichnet, daß jeder Schreibbefehl einer Dateneinheit, die durch die Adresse (ADx) adressiert ist, des Fabrikationspaßwortes (PW), das schreibgeschützt ist, eine Verifizierung der Kompatibilität zwischen der Dateneinheit und dem Fabrikationspaßwort und bei Inkompatibilität die Verriegelung des Speichers mit sich bringt.

10. System mit einer Verarbeitungseinheit (13), die mit einer Nutzerschnittstelle (14) und einem integrierten Schaltkreis (15) nach einem der Ansprüche 2 bis 8 verbunden ist, wobei die Einheit (13) sich eignet, beim Lesen und Schreiben den integrierten Schaltkreis (15) zu adressieren, dadurch gekennzeichnet, daß wenigstens ein Teil von notwendigen Dateneinheiten für die Funktion des Systems in der ersten Zone (Z) enthalten ist und daß die Verarbeitungseinheit (13) programmiert ist, um einen Geheimcode über die Nutzerschnittstelle (14) zu berücksichtigen und um den integrierten Schaltkreis (15) zum Schreiben der Geheimcodes an die vorgegebene Adresse (ADx, ADu) zu veranlassen.

11. System mit einer Verarbeitungseinheit (13) und einem integrierten Schaltkreis (15) nach Anspruch 9, wobei die Einheit sich dazu eignet, beim Lesen und beim Schreiben den integrierten Schaltkreis (15) zu adressieren, dadurch gekennzeichnet, daß wenigstens ein Teil von notwendigen Dateneinheiten für die Funktion des Systems in der ersten Zone (Z) enthalten ist, daß das Fabrikationspaßwort schreibgeschützt ist, daß die Verarbeitungseinheit (13) Mittel zum Berechnen des Fabrikationspaßwortes (PW) enthält, daß in Abhängigkeit von der Identifikationsdateneinheit (ID) verschlüsselt ist, was in der dritten Zone (Y) gelesen wird, und daß die Verarbeitungseinheit programmiert ist, um den integrierten Schaltkreis (15) zum Schreiben des Fabrikationspaßwortes, das verschlüsselt ist, an die Adresse (ADx) des Fabrikationspaßwortes (PW) zu veranlassen.

## Claims

1. Integrated circuit comprising an electrically modifiable non-volatile memory (1), an associated control circuit (2) and at least one volatile memory element (BL) producing a lock (L) whose state when energised defines a locked state of the said memory, the said integrated circuit being characterised in that the said memory (1) has a first area (Z) which can be protected in read mode by the said lock (L) and a second area (S) which is always protected in read mode, protected in write mode by the said lock (L) and containing at least one password (PW, UPW) at a given address (ADx, ADu), in that the said control circuit (2) comprises first means (7) for detecting an instruction to write a data item addressed by the said given address (ADx, ADu) whilst the said memory is locked and second means (8, 10) for checking the compatibility of the said data item with the said password (PW, UPW), the said compatibility being different from identity, and in that, in the event of compatibility, the said lock (L) is released.

2. Integrated circuit according to Claim 1, characterised in that it includes decoding means (8), the said compatibility check then consisting of decoding the said received data item addressed by the said given address (ADx, ADu) and comparing the said decoded data item with the said password (PW, UPW) contained at the said given address (ADx, ADu).

3. Integrated circuit according to Claim 2, characterised in that, when an instruction to write a data item addressed by the said given address (ADx) is detected whilst the lock (L) is released, the control circuit (2) activates the decoding of the said data item and the writing of the said decoded data item at the said given address (ADx).

4. Integrated circuit according to one of Claims 1 to 3, characterised in that the said second area (S) contains several passwords (PW), (UPW), in that one of the said passwords (PW), hereinafter referred to as the manufacturer password, can be protected in write mode independently of the state of the lock (L).

5. Integrated circuit according to Claim 4, characterised in that it contains a decoding key (MSK), in that the said memory (1) has a third area (Y) freely accessible in read mode and containing a system identification data item (ID) and in that the said key (MSK) and the said manufacturer password (PW) are functions of the said identification data item (ID).

6. Integrated circuit according to Claim 5, characterised in that the said key (MSK) is a word of the same length as the said passwords (PW, UPW) and in that the said coding or decoding then consists of performing "exclusive OR" operations on the bits of the same weight respectively of the key and of the word to be coded or decoded.

7. Integrated circuit according to Claim 5 or 6,
characterised in that the said key (MSK) is contained in the said second area (S), in that the said control circuit (2) comprises third means (7) for detecting an instruction to write a data item addressed by the address (ADm) of the said key (MSK) whilst the said lock (L) is released and in that the control circuit (2) activates the said decoding of the said data item and the writing of the said decoded data item to the said key address (ADm).

8. Integrated circuit according to one of Claims 5 to 7, characterised in that the said key (MSK) can be protected in write mode independently of the state of the lock (L).

9. Integrated circuit according to one of Claims 5 to 8, characterised in that any instruction to write a data item addressed by the address (ADx) of the manufacturer password (PW) protected in write mode gives rise to a check on compatibility between the said data item and the said manufacturer password and, in the event of non-compatibility, the locking of the memory.

10. System including a processing unit (13) connected to a user interface (14) and to an integrated circuit (15) according to one of Claims 2 to 8, the said unit (13) being capable of addressing the said integrated circuit (15) in read mode and in write mode, characterised in that at least some of the data necessary for the functioning of the said system are contained in the said first area (Z) and in that the processing unit (13) is programmed to take into account a confidential code by means of the user interface (14) and to instruct the said integrated circuit (15) to write the said confidential code to the said given address (ADx, ADu).

11. System including a processing unit (13) and an integrated circuit (15) according to Claim 9, the said unit being capable of addressing the said integrated circuit (15) in read mode and in write mode, characterised in that at least some of the data necessary for the functioning of the said system are contained in the said first area (Z), in that the manufacturer password is protected in write mode, in that the processing unit (13) comprises means for calculating the encoded manufacturer password (PW) according to the said identification data item (ID) read in the said third area (Y) and in that the processing unit is programmed to instruct the said integrated circuit (15) to write the said encoded manufacturer password at the said address (ADx) of the manufacturer password (PW).
